# EUROPEAN PATENT SPECIFICATION

(11) **EP 2 628 911 B1**
(45) Date of publication and mention of the grant of the patent: **01.07.2015**
(21) Application number: 11832625.5
(22) Date of filing: 14.10.2011
(51) Int. Cl.: F01N 3/20, F01N 11/00, B63H 21/22, B63H 21/32

(54) **SCR REDUCTION AGENT MARITIME SUPPLY SYSTEM**
Marines SCR-Reduktionsmittelversorgungssystem
SYSTÈME D'ALIMENTATION MARIN POUR AGENT RÉDUCTEUR SCR

(30) Priority: 14.10.2010 JP 2010231669
(43) Date of publication of application: 21.08.2013
(73) Proprietor: Mitsubishi Heavy Industries, Ltd., Tokyo 108-8215 (JP); Oshima Shipbuilding Co. Ltd., Nagasaki 857-2494 (JP); Japan Ship Machinery & Equipment Association, Minato-ku, Tokyo 105-0001 (JP)
(72) Inventor: HIRAOKA, Naohiro, Tokyo 108-8215 (JP); NAKAGAWA, Takahiro, Tokyo 108-8215 (JP); MISAWA, Keisuke, Tokyo 100-0006 (JP); NONAKA, Shinji, Saikai-shi Nagasaki 857-2494 (JP); KITAMURA, Shoichi, Tokyo 105-0001 (JP)
(74) Representative: Hoffmann Eitle
(86) International application number: PCT/JP2011/073695
(87) International publication number: WO 2012/050196

(56) References cited:
- WO-A1-2009/034833
- DE-A1-102006 051 926
- DE-A1-102007 000 526
- JP-A- 2003 010 644
- JP-A- 2003 314 252
- JP-A- 2009 108 850
- JP-A- 2009 250 168
- JP-A- 2009 508 053
- JP-A- 2010 071 148
- JP-A- 2010 071 148

## Description

### {Technical Field}

The present invention relates to a reducing-agent supply system for marine SCR that removes nitrogen oxides from, for example, exhaust gas exhausted from a two-cycle low-speed diesel engine employed as a main engine in a ship.

### {Background Art}

With the increasing interest in environmental protection in recent years, there is a need to decrease the amount of nitrogen oxides (hereinafter, referred to as "NOx") contained in exhaust gas exhausted from, for example, a two-cycle low-speed diesel engine employed as a main engine in a ship. In order to decrease the amount of NOx, in a generally known method, the exhaust gas from a diesel engine is made to pass through a denitration catalyst (for example, see Patent Literature 1).

Here, catalysts generally employed as the denitration catalysts are based on the selective catalytic reduction method (SCR method) in which reduction to nitrogen is performed by using ammonia or the like as a reducing agent.

DE 10 2006 051926 A1 describes a pipeline having a circumferentially closed wall designed for guiding a reducing agent, and sensor electrodes. Another closed wall surrounds the wall, and an intermediate gap is provided between the walls. The sensor electrodes are partially arranged in the gap. The sensor electrodes are designed in a point-shaped, line-shaped or linear manner. The wall has electrically conducting surfaces adjacent to the intermediate gap.

### {Citation List}

### {Patent Literature}

{PTL 1} Japanese Unexamined Patent Application, Publication No. Hei 5-288040

### {Summary of Invention}

### {Technical Problem}

However, if highly toxic ammonia solution is selected as a reducing agent and leakage of the ammonia solution occurs from one of the components forming a reducing-agent supply system for marine SCR, it may become impossible to ensure the safety of crew members.

The present invention has been conceived in order to solve the above-described problems, and an object thereof is to provide a reducing-agent supply system for marine SCR, with which it is possible to ensure the safety of crew members even if highly toxic ammonia solution is selected as a reducing agent and leakage of the ammonia solution occurs from one of components forming the reducing-agent supply system for marine SCR.

### {Solution to Problem}

In order to achieve the object described above, the present invention provides the following solutions.

A reducing-agent supply system for marine SCR according to an aspect of the present invention is a reducing-agent supply system for marine SCR that is provided with a reducing- agent storage tank that stores a reducing agent, a denitration reactor that is provided with a catalyst that performs reduction of nitrogen oxide contained in exhaust gas exhausted from a marine diesel engine, a reducing-agent injection nozzle that is provided in a flue that communicates between the marine diesel engine and the denitration reactor so that the distal end thereof is exposed and from which the reducing agent stored in the reducing-agent storage tank is jetted into the exhaust gas that passes through the flue, and a reducing- agent supply pipe that guides the reducing agent stored in the reducing-agent storage tank to the reducing-agent injection nozzle, and that performs reduction of the nitrogen oxide contained in the exhaust gas exhausted from the marine diesel engine, the reducing-agent supply system for marine SCR including a reducing-agent-storage-tank chamber that accommodates the reducing-agent storage tank; a reducing- agent-injection-nozzle chamber that accommodates the proximal end of the reducing-agent injection nozzle; and a duct that accommodates the reducing-agent supply pipe, wherein each of the reducing-agent storage tank, the reducing-agent injection nozzle, and the duct are configured as a double structure so that leakage of the reducing agent into the ship interior does not occur.

With the reducing-agent supply system for marine SCR described above, even if the reducing agent leaks from the components forming the reducing-agent supply system for marine SCR, for example, the reducing-agent storage tank, the reducing-agent injection nozzle, or the reducing-agent supply pipe, because the leaked reducing agent will be inside the double structure and the reducing agent does not leak outside the double structure, even if highly toxic ammonia solution is selected as the reducing agent and leakage of the ammonia solution occurs from one of the components forming the reducing-agent supply system for marine SCR, it is possible to ensure the safety of crew members.

In the reducing-agent supply system for marine SCR described above, it is further preferable that external air taken in from an external-air intake port that opens to the ship exterior be guided to the interior of the double structure so as to be exhausted from an exhaust port that opens to the ship exterior after being utilized for ventilating the interior of the double structure.

With such a reducing-agent supply system for marine SCR, the components forming the reducing-agent supply system for marine SCR, for example, the reducing-agent storage tank, the reducing-agent injection nozzle, and the reducing-agent supply pipe, are cooled by the external air that circulates inside the double structure, causing the reducing agent existing inside thereof to be cooled, which prevents the gasification (boiling) of the reducing agent, and thus, it is possible to prevent performance deterioration in the reducing-agent supply system for marine SCR.

In the reducing-agent supply system for marine SCR described above, it is further preferable that gas detectors be individually provided at the top of the interior of the reducing-agent-storage-tank chamber and the top of the interior of the reducing-agent-injection-nozzle chamber.

With such a reducing-agent supply system for marine SCR, because the gas detectors are provided at the top of the interior of the reducing-agent-storage-tank chamber and the top of the interior of the reducing-agent-injection-nozzle chamber, where the gasified reducing agent tends to dwell, it is possible to prevent misdetection by the gas detectors, and it is possible to quickly determine in which location the gasified reducing agent has been detected.

In the reducing-agent supply system for marine SCR described above, it is further preferable that the reducing-agent storage tank be provided with internal-pressure adjusting means for maintaining the internal pressure thereof within a predetermined range.

With such a reducing-agent supply system for marine SCR, because the pressure in the reducing-agent storage tank is maintained within the predetermined range, it is possible to prevent damage to the reducing-agent storage tank due to changes in the internal pressure thereof, and thus, it is possible to prevent leakage of the reducing agent from the reducing-agent storage tank.

In the reducing-agent supply system for marine SCR described above, it is further preferable that first cooling means for cooling the reducing agent existing in the reducing-agent storage tank by cooling the reducing-agent storage tank be provided inside the reducing-agent-storage-tank chamber or in the reducing-agent storage tank.

With such a reducing-agent supply system for marine SCR, because the reducing-agent storage tank is cooled by the first cooling means, thus cooling the reducing agent existing in the reducing-agent storage tank, it is possible to prevent the gasification (boiling) of the reducing agent existing in the reducing-agent storage tank.

In the reducing-agent supply system for marine SCR described above, it is further preferable that second cooling means for cooling the reducing agent supplied from the reducing-agent storage tank via the reducing-agent supply pipe be provided in the vicinity of an intake port of a pump that expels pressurized reducing agent into the reducing-agent injection nozzle.

With such a reducing-agent supply system for marine SCR, because the reducing agent that is taken into the pump is cooled in advance, it is possible to prevent gasification (boiling) of the reducing agent in the pump, and thus, the reducing agent can be supplied normally.

A ship-exhaust-gas denitration device according to the present invention is equipped with any one of the reducing-agent supply systems for marine SCR described above.

Because the ship-exhaust-gas denitration device described above is equipped with the highly reliable reducing-agent supply system for marine SCR with which the safety of the crew members can be ensured even if highly toxic ammonia solution is selected as the reducing agent and leakage of the ammonia solution occurs from one of the components forming the reducing-agent supply system for marine SCR, the safety of the crew members can be ensured and the reliability of a ship as a whole can be enhanced.

A ship according to the present invention is equipped with one of the reducing-agent supply systems for marine SCR described above or the ship-exhaust-gas denitration device described above.

Because the ship described above is equipped with the highly reliable reducing-agent supply system for marine SCR with which the safety of the crew members can be ensured even if highly toxic ammonia solution is selected as the reducing agent and leakage of the ammonia solution occurs from one of the components forming the reducing-agent supply system for marine SCR, the safety of the crew members can be ensured and the reliability of the ship as a whole can be enhanced.

### {Advantageous Effects of Invention}

A reducing-agent supply system for marine SCR according to the present invention affords an advantage in that it is possible to ensure the safety of crew members even if highly toxic ammonia solution is selected as a reducing agent, and leakage of the ammonia solution occurs from one of components forming the reducing-agent supply system for marine SCR.

### {Brief Description of Drawings}

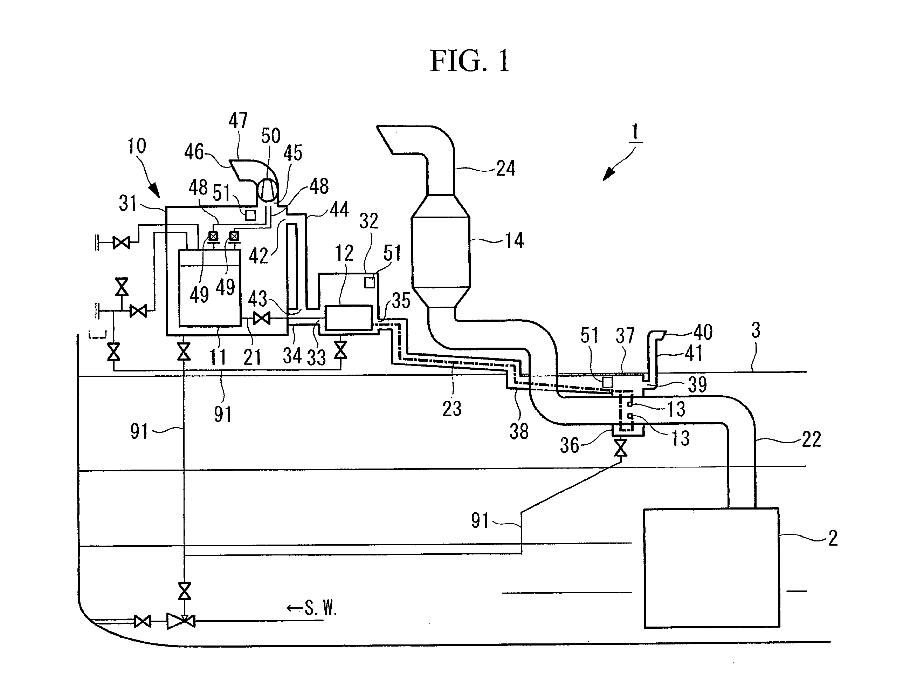

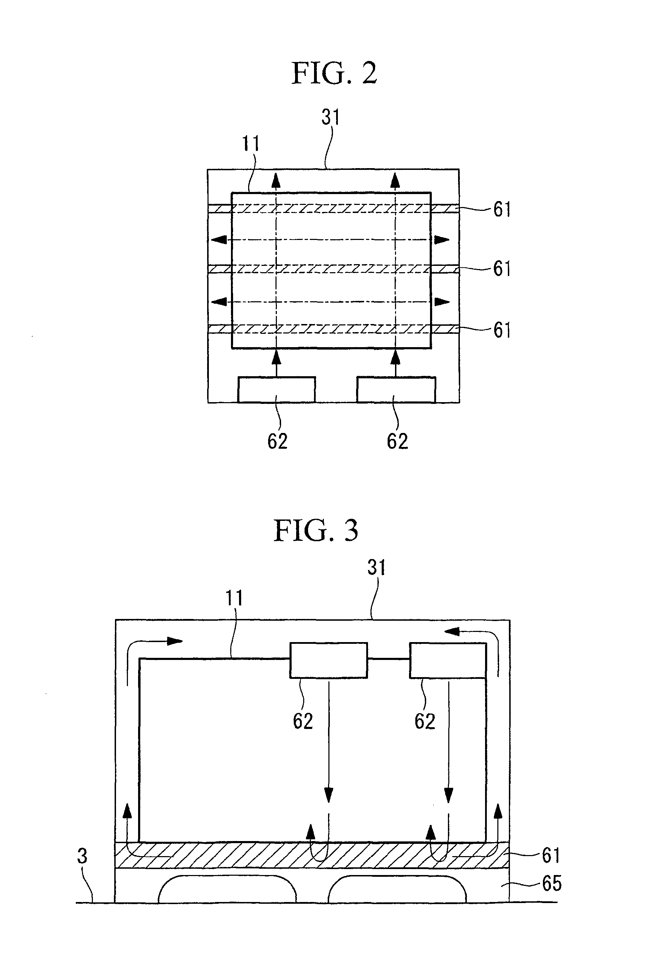

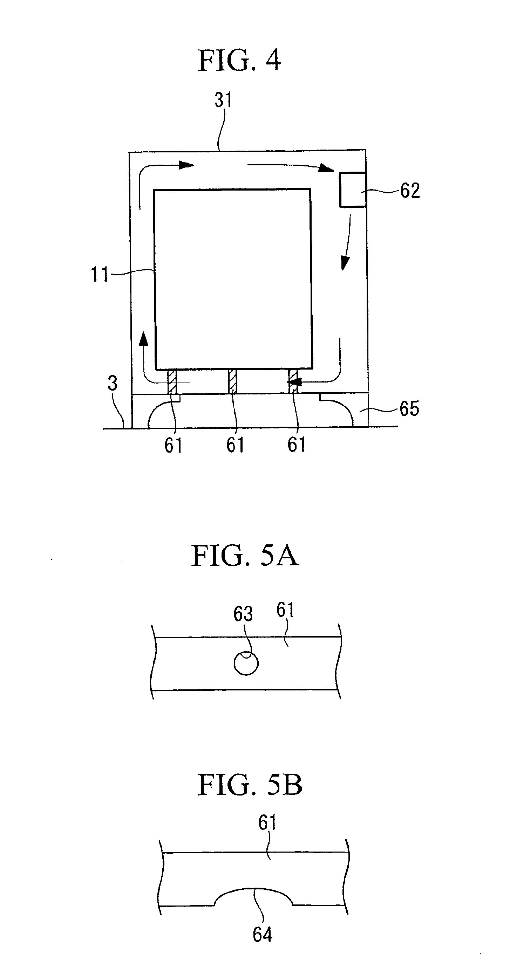

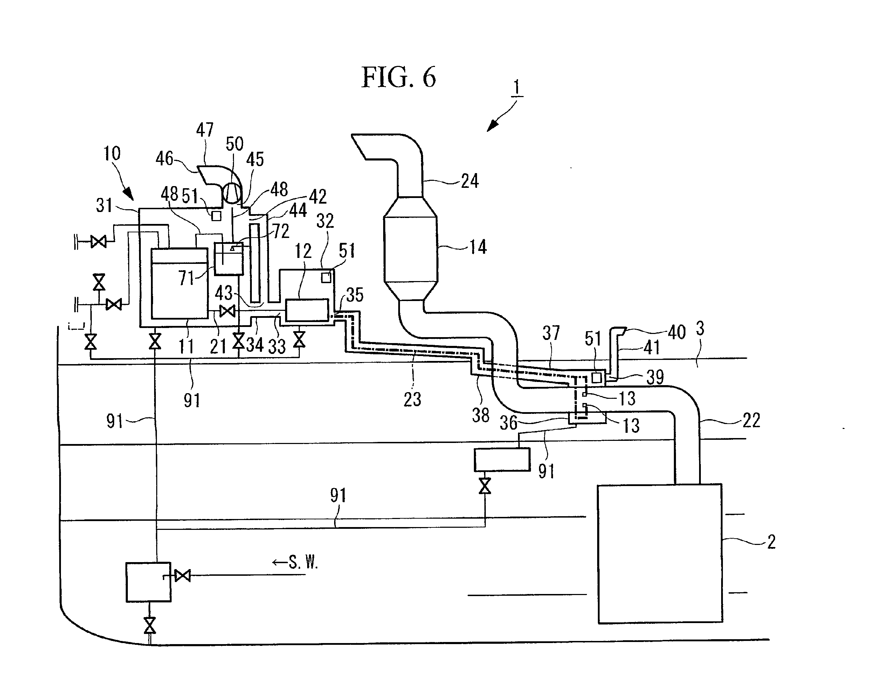

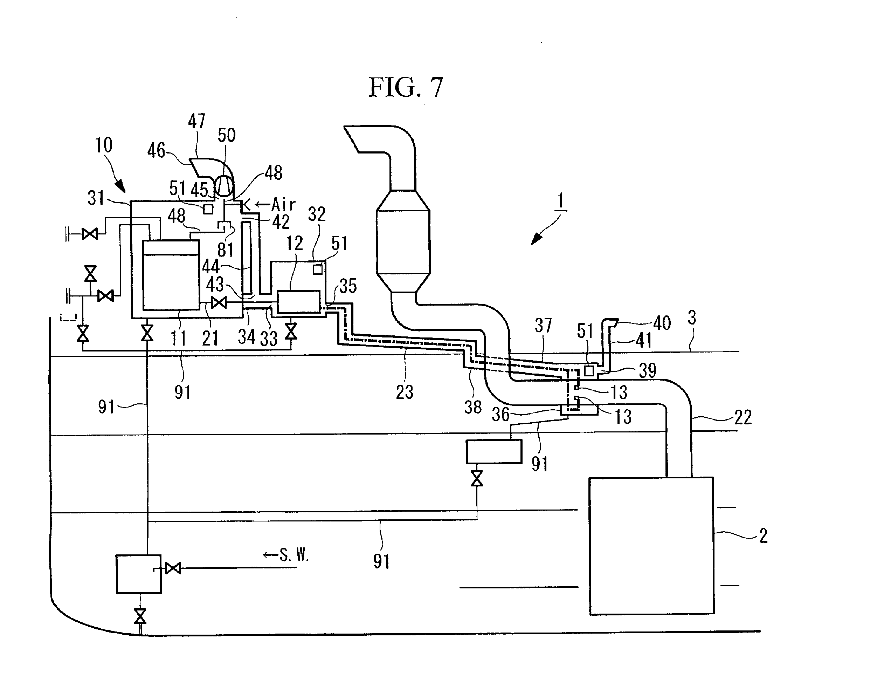

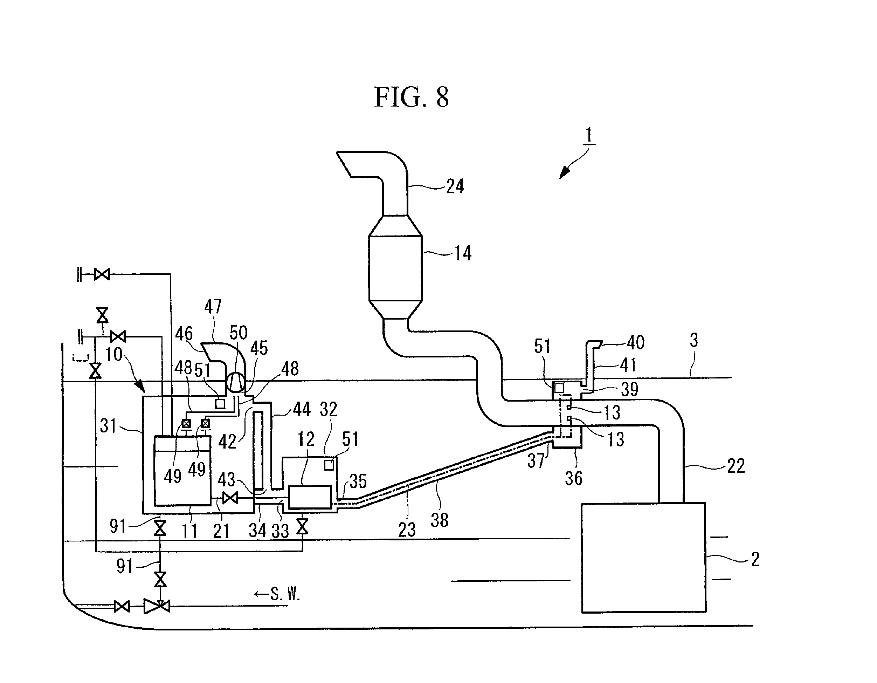

{Fig. 1} Fig. 1 is a diagram showing, in outline, the configuration of a ship equipped with a reducing-agent supply system for marine SCR according to a first embodiment of the present invention.
{Fig. 2} Fig. 2 is a plan view showing an arrangement in a reducing-agent-storage-tank chamber.
{Fig. 3} Fig. 3 is a diagram showing the arrangement in the reducing-agent-storage-tank chamber and is a side view in which Fig. 2 is viewed from below.
{Fig. 4} Fig. 4 is a diagram showing the arrangement in the reducing-agent-storage-tank chamber and is a front view in which Fig. 2 is viewed from the left.
{Fig. 5A} Fig. 5A is a diagram showing a plan view of a portion of a frame in enlargement, in which a round hole having a circular shape in plan view is formed in the frame.
{Fig. 5B} Fig. 5B is a diagram showing a plan view of a portion of a frame in enlargement, in which a notch having an arch shape in plan view is formed in the frame.
{Fig. 6} Fig. 6 is a diagram showing, in outline, the configuration of a ship equipped with a reducing-agent supply system for marine SCR according to a second embodiment of the present invention.
{Fig. 7} Fig. 7 is a diagram showing, in outline, the configuration of a ship equipped with a reducing-agent supply system for marine SCR according to a third embodiment of the present invention.
{Fig. 8} Fig. 8 is a diagram showing, in outline, the configuration of a ship equipped with a reducing-agent supply system for marine SCR according to a fourth embodiment of the present invention.

### {Description of Embodiments}

### {First Embodiment}

A reducing-agent supply system for marine SCR according to a first embodiment of the present invention will be described below with reference to Figs. 1 to 5B.

Fig. 1 is a diagram showing, in outline, the configuration of a ship equipped with the reducing-agent supply system for marine SCR according to this embodiment, Fig. 2 is a plan view showing an arrangement in a reducing-agent-storage-tank chamber, Fig. 3 is a diagram showing the arrangement in the reducing-agent-storage-tank chamber and is a side view in which Fig. 2 is viewed from below, Fig. 4 is a diagram showing the arrangement in the reducing-agent-storage-tank chamber and is a front view in which Fig. 2 is viewed from the left, Fig. 5A is a diagram showing a plan view of a portion of a frame in enlargement, in which a round hole having a circular shape in a plan view is formed in the frame, and Fig. 5B is a diagram showing a frame in which a notch having an arch shape in plan view is formed.

A ship 1 according to this embodiment is provided with a marine diesel engine 2 and a reducing-agent supply system for marine SCR 10.

A specific example of the marine diesel engine 2 includes, for example, a two-cycle low-speed diesel engine that is provided with cylinder portions (not shown), an exhaust receiver (an exhaust collection pipe, i.e., an exhaust manifold), and a turbocharger and that is employed as a main engine in the ship 1.

Pistons (not shown) connected to a crankshaft (not shown) are disposed inside the individual cylinder portions. Exhaust ports (not shown) of the individual cylinder portions communicate with (are connected to) the exhaust receiver via exhaust pipes (not shown), and, at openings for the cylinders in the individual exhaust pipes, exhaust valves (not shown) that open and close the openings are disposed.

The reducing-agent supply system for marine SCR 10 is provided with a reducing-agent storage tank 11, a reducing-agent supply device 12, reducing-agent injection nozzles 13, a denitration reactor 14, and a control device (not shown).

A reducing agent, such as ammonia solution, urea solution, or the like ("25 wt.% ammonia solution" in this embodiment), is stored in the reducing-agent storage tank 11. The reducing-agent storage tank 11 and the reducing-agent supply device 12 are communicated (connected) via a (first) reducing-agent supply pipe (inner pipe) 21 so that the reducing agent is supplied from the reducing-agent storage tank 11 to the reducing-agent supply device 12 from time to time as needed.

A clean-water supply pipe (not shown) and an air supply pipe (not shown) are connected to the reducing-agent supply device 12; clean water is supplied, from time to time as needed, from a clean-water tank (not shown) provided at the bottom of the ship 1 to the reducing-agent supply device 12; and control air is supplied from an air tank (not shown) provided in the ship 1 to the reducing-agent supply device 12.

A plurality of (for example, four) reducing-agent injection nozzles 13 are provided in a (first) flue (exhaust pipe) 22 that communicates (connects) the marine diesel engine 2 (the turbocharger, to be more specific) and the denitration reactor 14 so that distal ends thereof are exposed. The proximal ends of the reducing-agent injection nozzles 13 are communicated (connected) via a distribution pipe (not shown), and the distribution pipe and the reducing-agent supply device 12 are communicated (connected) via a (second) reducing-agent supply pipe (inner pipe) 23 so that the reducing agent is supplied from the reducing-agent supply device 12 from time to time as needed. Then, the reducing agent is supplied (reducing agent is sprayed) into the flue 22 from the reducing-agent injection nozzles 13 in the form of a mist.

The amount of clean water and the amount of control air to be supplied to the reducing-agent supply device 12 and the amount of reducing agent to be supplied to the reducing-agent injection nozzles 13 are controlled by the control device.

A plurality of catalysts (not shown) that have, for example, a cuboid shape in an external view and that also have a honeycomb (bee-hive) structure are provided (disposed) in the interior of the denitration reactor 14, and, when the exhaust gas passes (blows) through these catalysts, NOx is decomposed into nitrogen and water, thus removing NOx in the exhaust gas. Then, the exhaust gas from which NOx has been removed is guided to a funnel via a (second) flue (exhaust pipe) 24 that communicates (connects) the denitration reactor 14 and the funnel (not shown) so as to be exhausted into the atmosphere from the funnel.

In this embodiment, the reducing-agent storage tank 11 and the reducing-agent supply device 12 are accommodated in a reducing-agent-storage-tank chamber 31 and a reducing-agent-supply-device chamber 32, respectively, which are provided on an exposed deck 3 of the ship 1.

Of the reducing-agent supply pipe 21, the part of the reducing-agent supply pipe 21 positioned between the reducing-agent-storage-tank chamber 31 and the reducing-agent-supply-device chamber 32 is accommodated in a (first) duct (outer pipe) 34 that is connected, at one end thereof, to one side wall (one outer wall) of the reducing-agent-storage-tank chamber 31 at the bottom (bottom portion) and that is connected, at the other end thereof, to a through-hole 33 provided at the bottom (bottom portion) of one side wall (one outer wall) of the reducing-agent-supply-device chamber 32 so as to communicate with the interior of the reducing-agent-supply-device chamber 32.

A through-hole (not show) through which the reducing-agent supply pipe 21 merely passes (is inserted) is provided in the one side wall of the reducing-agent-storage-tank chamber 31, and the space formed between this through-hole and the reducing-agent supply pipe 21 is closed off(sealed) by means of a welding bead, seal member, or the like.

Of the reducing-agent supply pipe 23, the part of the reducing-agent supply pipe 23 positioned between the reducing-agent-supply-device chamber 32 and the distribution pipe is accommodated in a (second) duct (outer pipe) 38 that is connected, at one end thereof, to a through-hole 35 provided at the bottom (bottom portion) of the other side wall (other outer wall) of the reducing-agent-supply-device chamber 32 so as to communicate with the interior of the reducing-agent-supply-device chamber 32 and that is connected, at the other end thereof, to a through-hole 37 provided at the top (top portion) of one side wall (one outer wall) of a distribution-pipe chamber (expanded space, i.e., reducing-agent-injection-nozzle chamber) 36, which accommodates the distribution pipe, so as to communicate with the interior of the distribution-pipe chamber 36. A through-hole 39 is provided in the distribution-pipe chamber 36, and a (third) duct (outer pipe) 41, one end of which serves as an external-air intake port (air intake port) 40 that opens above the exposed deck 3, is connected to this through-hole 39 at the other end thereof.

On the other hand, a through-hole 42 is provided at the top (top portion) of the one side wall (one outer wall) of the reducing-agent-storage-tank chamber 31, a through-hole 43 is provided in a circumferential wall of the duct 34, and the through-hole 42 and the through-hole 43 are communicated (connected) via a (fourth) duct 44. A through-hole 45 is provided in a ceiling surface of the reducing-agent-storage-tank chamber 31, and a (fifth) duct 47, one end of which serves as an exhaust port 46 that opens above the ceiling surface of the reducing-agent-storage-tank chamber 31, is connected to this through-hole 45 at the other end thereof.

At least one through-hole (not shown) is provided in a ceiling surface of the reducing-agent storage tank 11, and at least one (two in this embodiment) pipe 48, one end of which is positioned so as to open in the vicinity of the through-hole 45 or inside the through-hole 45, is connected to this through-hole at the other end thereof. A breather valve (internal-pressure adjusting means) 49 is connected to an intermediate portion of each pipe 48, which is configured so as to be automatically opened to release gasified reducing agent in the reducing-agent storage tank 11 when the pressure in the reducing-agent storage tank 11 becomes equal to or greater than a first prescribed value so as to maintain the pressure inside the reducing-agent storage tank 11 at or below the first prescribed value, and so as to be automatically opened to take in the air (external air) in the reducing-agent-storage-tank chamber 31 into the reducing-agent storage tank 11 when the pressure in the reducing-agent storage tank 11 becomes equal to or less than a second prescribed value, which is lower than the first prescribed value, so as to maintain the pressure inside the reducing-agent storage tank 11 at or above the second prescribed value. An exhaust fan 50 is provided in the duct 47, and the gasified reducing agent that has been released from one open end of the pipe 48 when the breather valve 49 is opened and the external air that has been taken in from the external-air intake port 40 to be guided into the top of the interior of the reducing-agent-storage-tank chamber 31 from the through-hole 42 by sequentially traveling through the duct 41, the distribution-pipe chamber 36, the duct 38, the reducing-agent-supply-device chamber 32, the duct 34, and the duct 44 are sucked by the exhaust fan 50 to be released to the ship exterior from the exhaust port 46.

The exhaust fan 50 can be divided into an induced draft fan (not shown) that only has a ventilation function and an exhaust fan (not shown) that has an exhaust-dilution function.

Gas detectors 51 are individually provided at the top of the interior of the reducing-agent-storage-tank chamber 31, the top of the interior of the reducing-agent-supply-device chamber 32, and the top of the interior of the distribution-pipe chamber 36, and when the gas detectors 51 detect (sense) the gasified reducing agent, detection signals are output to the control device so that it can be determined in which location among the interior of the reducing-agent-storage-tank chamber 31, the interior of the reducing-agent-supply-device chamber 32, and the interior of the distribution-pipe chamber 36 the gasified reducing agent has been detected.

As shown in Figs. 2 to 4, the reducing-agent storage tank 11 is secured on a plurality of (three in this embodiment) frames 61 provided on the floor of the reducing-agent-storage-tank chamber 31 so as to be parallel with each other and to extend from one side wall toward the other side wall of the reducing-agent-storage-tank chamber 31, and an air cooling device (air conditioning device, i.e., first cooing means) 62 that cools the air (external air) existing in the reducing-agent-storage-tank chamber 31 is attached at the top (top portion) of a (third) side wall positioned between the one side wall and the other side wall of the reducing-agent-storage-tank chamber 31. A plurality of round holes 63 having a circular shape in plan view, as shown in Fig. 5A, or notches 64 having an arch shape in plan view, as shown in Fig. 5B, are provided in the individual frames 61 along the longitudinal direction thereof, and the cool air blown out from the air cooling device 62 circulates by passing through these round holes 63 or the notches 64 so as to form a circulating cool-air flow (see arrow in the drawings) in the reducing-agent-storage-tank chamber 31.

Reference sign 65 in Figs. 3 and 4 indicates a support plate (support member) that is secured to an installation surface (the exposed deck 3 in this embodiment) and that supports the bottom surface (of the floor) of the reducing-agent-storage-tank chamber 31. The top surface of the support plate 65 and the bottom surface of the reducing-agent-storage-tank chamber 31 are joined by means of welding.

With the reducing-agent supply system for marine SCR 10 according to this embodiment, even if the reducing agent leaks from the components forming the reducing-agent supply system for marine SCR 10, for example, the reducing-agent storage tank 11, the reducing-agent supply device 12, the reducing-agent injection nozzles 13, and the reducing-agent supply pipes 21 and 23, because the leaked reducing agent will be inside a double structure and the reducing agent does not leak outside the double structure, even if highly toxic ammonia solution is selected as the reducing agent and leakage of the ammonia solution occurs from one of the components forming the reducing-agent supply system for marine SCR 10, it is possible to ensure the safety of crew members.

With the reducing-agent supply system for marine SCR 10 according to this embodiment, the components forming the reducing-agent supply system for marine SCR 10, for example, the reducing-agent storage tank 11, the reducing-agent supply device 12, the reducing-agent injection nozzles 13, and the reducing-agent supply pipes 21 and 23, are cooled by the external air that circulates inside the double structure, causing the reducing agent existing inside thereof to be cooled, which prevents the gasification (boiling) of the reducing agent, and thus, it is possible to prevent performance deterioration in the reducing-agent supply system for marine SCR 10.

With the reducing-agent supply system for marine SCR 10 according to this embodiment, because the gas detectors 51 are individually provided at the top of the interior of the reducing-agent-storage-tank chamber 31, the top of the interior of the reducing-agent-supply-device chamber 32, and the top of the interior of the reducing-agent-injection-nozzle chamber 36, where the gasified reducing agent tends to dwell, it is possible to prevent misdetection by the gas detectors 51, and it is possible to quickly determine in which location the gasified reducing agent has been detected.

With the reducing-agent supply system for marine SCR 10 according to this embodiment, because the breather valve (internal-pressure adjusting means) 49 that maintains the internal pressure within the predetermined range is provided in the reducing-agent storage tank 11, so that the pressure in the reducing-agent storage tank 11 is maintained within the predetermined range, it is possible to prevent damage to the reducing-agent storage tank 11 due to changes in the internal pressure thereof, and thus, it is possible to prevent leakage of the reducing agent from the reducing-agent storage tank 11.

With the reducing-agent supply system for marine SCR 10 according to this embodiment, because the air cooling device (air conditioning device, i.e., cooling means) 62 that cools the reducing agent existing in the reducing-agent storage tank 11 by cooling the reducing-agent storage tank 11 is provided in the reducing-agent-storage-tank chamber 31, and because the reducing-agent storage tank 11 is cooled by the air cooling device 62, thus cooling the reducing agent existing in the reducing-agent storage tank 11, it is possible to prevent gasification (boiling) of the reducing agent existing in the reducing-agent storage tank 11.

Because the flow direction of the external air that flows into the reducing-agent-storage-tank chamber 31 via the through-hole 42 is perpendicular to the main flow direction of the cool air circulating in the reducing-agent-storage-tank chamber 31, the heat exchange between the external air and the cool air can be minimized, and thus, the reducing-agent storage tank 11 can be cooled efficiently.

It is possible to utilize a separation effect whereby the cool air goes downward and the ammonia goes upward.

Because the ship 1 according to this embodiment is equipped with the highly-reliable reducing-agent supply system for marine SCR 10 with which the safety of the crew members can be ensured even if highly toxic ammonia solution is selected as the reducing agent and leakage of the ammonia solution occurs from one of the components forming the reducing-agent supply system for marine SCR 10, the safety of the crew members can be ensured, and the reliability of the ship 1 as a whole can be enhanced.

### {Second Embodiment}

A reducing-agent supply system for marine SCR according to a second embodiment of the present invention will be described with reference to Fig. 6.

Fig. 6 is a diagram showing, in outline, the configuration of a ship equipped with the reducing-agent supply system for marine SCR according to this embodiment.

As shown in Fig. 6, the reducing-agent supply system for marine SCR 10 according to this embodiment differs from the one in the first embodiment described above in that a seal tank 71 is provided instead of the breather valve 49. Because the other components are the same as those of the first embodiment described above, descriptions of those components will be omitted herein.

The same reference signs are assigned to the members that are the same as those of the first embodiment described above.

A predetermined amount of water (for example, clean water) is stored in the seal tank (internal-pressure adjusting means) 71, and, by dissolving the gas that is volatilized from the reducing-agent storage tank 11 in water, the volatilized gas exiting the seal tank 71 (exiting from each pipe 48) reaches a sufficiently low concentration.

Reference sign 72 in Fig. 6 indicates a replenishing pipe for replenishing water in the seal tank 71.

With the reducing-agent supply system for marine SCR 10 according to this embodiment, because the gas volatilized from the reducing-agent storage tank 11 dissolves in water stored in the seal tank 71, the volatilized gas exiting the seal tank 71 (exiting from each pipe 48) can be made to reach a sufficiently low concentration.

In the case in which the exhaust fan 50 is divided into an induced draft fan (not shown) that only has a ventilation function and an exhaust fan (not shown) that has an exhaust-dilution function, it is possible to eliminate the need for the exhaust fan (not shown) having the exhaust-dilution function in the first embodiment described above.

Because other advantageous effects are the same as those of the first embodiment described above, descriptions thereof will be omitted herein.

### {Third Embodiment}

A reducing-agent supply system for marine SCR according to a third embodiment of the present invention will be described with reference to Fig. 7.

Fig. 7 is a diagram showing, in outline, the configuration of a ship equipped with the reducing-agent supply system for marine SCR according to this embodiment.

As shown in Fig. 7, the reducing-agent supply system for marine SCR 10 according to this embodiment differs from the one in the second embodiment described above in that a drafter (internal-pressure adjusting means) 81 is provided instead of the seal tank 71. Because the other components are the same as those of the second embodiment described above, descriptions of those components will be omitted herein.

The same reference signs are assigned to the members that are the same as those of the embodiments described above.

The drafter 81 is means for constantly exhausting the volatilized gas to the tank exterior and serves as a substitute for the seal tank 71 in the second embodiment by setting the flow velocity in the drafter 81 so that leakage from the reducing-agent storage tank 11 is not misdetected.

When the diluted exhaust cannot be performed by means of the ventilation air alone, it is possible to achieve a safe concentration by adding dilution air by using the drafter 81 or the like.

Reference sign 72 in Fig. 6 indicates a replenishing pipe for replenishing water in the seal tank 71.

With the reducing-agent supply system for marine SCR 10 according to this embodiment, by setting the flow velocity in the drafter 81 so that leakage from the reducing-agent storage tank 11 is not misdetected, it is possible to prevent misdetection of leakage from the reducing-agent storage tank 11.

Because other advantageous effects are the same as those of the first embodiment described above, descriptions thereof will be omitted herein.

### {Fourth Embodiment}

A reducing-agent supply system for marine SCR according to a fourth embodiment of the present invention will be described with reference to Fig. 8.

Fig. 8 is a diagram showing, in outline, the configuration of a ship equipped with the reducing-agent supply system for marine SCR according to this embodiment.

As shown in Fig. 8, the reducing-agent supply system for marine SCR 10 according to this embodiment differs from the one in the first embodiment described above in that the reducing-agent storage tank 11 and the reducing-agent supply device 12 are accommodated in the reducing-agent-storage-tank chamber 31 and the reducing-agent-supply-device chamber 32, respectively, which are provided below the exposed deck 3 of the ship 1. Because the other components are the same as those of the first embodiment described above, descriptions of those components will be omitted herein.

The same reference signs are assigned to the members that are the same as those of the first embodiment described above.

In contrast to the first embodiment described above in which the reducing-agent storage tank 11 and the reducing-agent supply device 12 are accommodated in the reducing-agent-storage-tank chamber 31 and the reducing-agent-supply-device chamber 32, respectively, which are provided on the exposed deck 3 of the ship 1, in this embodiment, the reducing-agent storage tank 11 and the reducing-agent supply device 12 are accommodated in the reducing-agent-storage-tank chamber 31 and the reducing-agent-supply-device chamber 32, respectively, which are provided below the exposed deck 3 of the ship 1.

Specifically, in contrast to the first embodiment described above in which the duct 38 is disposed so that one end of the duct 38 is positioned above the other end in the vertical direction and an upward slope is formed from the other end to the one end of the duct 38 so as to cause the external air that passes through the duct 38 to rise from the other end to the one end thereof, in this embodiment, the duct 38 is disposed so that the one end of the duct 38 is positioned below the other end in the vertical direction and a downward slope is formed from the other end to the one end of the duct 38 so as to cause the external air that passes through the duct 38 to fall from the other end to the one end thereof.

By disposing the duct 38 so that the one end of the duct 38 is positioned below the other end in the vertical direction and the downward slope is formed from the other end to the one end of the duct 38 so as to cause the external air that passes through the duct 38 to fall from the other end to the one end thereof, the reducing-agent supply system for marine SCR 10 according to this embodiment affords the following advantageous effects.
(1) Even if bubbles form inside the reducing-agent supply pipe 23, because the bubbles move upward inside the reducing-agent supply pipe 23, the reducing agent can stably be supplied without affecting a pump that constitutes the reducing-agent supply device 12 and that also expels (supplies) pressurized reducing agent into the reducing-agent injection nozzles 13.
(2) Because the reducing-agent storage tank 11 exists inside the ship 1 (ship interior), it is possible to prevent heat input from the external air (including direct sunlight or the like), and thus, it is possible to facilitate cooling.
(3) Even if leakage of the reducing agent occurs from the reducing-agent supply pipe 23, because the reducing agent drops in the same direction as the flow of the ventilation air, it is possible to reduce the chance of the reducing agent remaining in the duct 38.
(4) It is possible to remove (eliminate the need for) a ship-exterior exhaust pipe (drain line) 91 that is disposed so as to communicate between the floor of the reducing-agent-supply-device chamber 32 and the floor of the reducing-agent-injection-nozzle chamber 36, it is possible to make the ship-exterior exhaust pipe 91 shorter, and thus, it is possible to reduce the danger associated with the reducing agent.

Because other advantageous effects are the same as those of the first embodiment described above, descriptions thereof will be omitted herein.

The present invention is not limited to the embodiments described above, and it is possible to employ an embodiment in which modifications or alterations are appropriately incorporated as needed.

For example, fins or dimples may be provided on inner circumferential surfaces and/or outer circumferential surfaces of the reducing-agent supply pipe 21 and/or the reducing-agent supply pipe 23 so as to enhance the heat transfer performance of the reducing-agent supply pipes 21 and 23.

In the embodiments described above, the air existing in the reducing-agent-storage-tank chamber 31 is cooled by using the air-cooling device 62, the reducing-agent storage tank 11 is cooled by the cooled air, and thus, the reducing agent existing in the reducing-agent storage tank 11 is cooled; however, instead of the air-cooling device 62, a water-cooled wall (first cooling means) in which cooling is performed by circulating sea water or the like may be employed in at least one of the side walls (outer walls), the ceiling surface, and the floor of the reducing-agent storage tank 11 to cool the reducing agent existing in the reducing-agent storage tank 11.

A (second) cooling means (for example, a heat exchanger that cools the reducing agent by performing heat exchange with sea water or the like) for cooling the reducing agent supplied from the reducing-agent storage tank 11 via the reducing-agent supply pipe 21 may be disposed at (in the vicinity of) the intake port of the pump (for example, diaphragm pump) that forms the reducing-agent supply device 12 and that also expels (supplies) the pressurized reducing agent to the reducing-agent injection nozzles 13 so that the pump efficiency is enhanced by preventing the gasification (boiling) of the reducing agent in the pump by decreasing, in advance, the temperature of the reducing agent to be taken into the pump.

It is more preferable that at least one through-hole (not shown) be provided in each of the floor of the reducing-agent-storage-tank chamber 31, the floor of the reducing-agent-supply-device chamber 32, and the floor of the reducing-agent-injection-nozzle chamber 36 and that the ship-exterior exhaust pipes 91 be connected at one end thereof to the through-holes.

By doing so, even if the reducing agent leaks (leakage occurs), and the reducing agent accumulates on the floor of the reducing-agent-storage-tank chamber 31, the floor of the reducing-agent-supply-device chamber 32, and the floor of the reducing-agent-injection-nozzle chamber 36, the reducing agent can safely be discharged to the ship exterior, and thus, it is possible to ensure greater safety of crew members.

### {Reference Signs List}

1 ship
2 marine diesel engine
10 reducing-agent supply system for marine SCR
11 reducing-agent storage tank
13 reducing-agent injection nozzle
14 denitration reactor
21 (first) reducing-agent supply pipe
22 (first) flue
23 (second) reducing-agent supply pipe
31 reducing-agent-storage-tank chamber
34 (first) duct
36 distribution-pipe chamber (reducing-agent-injection-nozzle chamber)
38 (second) duct
40 external-air intake port
46 exhaust port
49 breather valve (internal-pressure adjusting means)
51 gas detector
62 air-cooling device (first cooling means)
71 seal tank (internal-pressure adjusting means)
81 drafter (internal-pressure adjusting means)

## Claims

1. A reducing-agent supply system for marine SCR (10) that is provided with
a reducing-agent storage tank (11) that stores a reducing agent,
a denitration reactor (14) that is provided with a catalyst that performs reduction of nitrogen oxide contained in exhaust gas exhausted from a marine diesel engine (2),
a reducing-agent injection nozzle (13) that is provided in a flue (22) that communicates between the marine diesel engine and the denitration reactor so that the distal end thereof is exposed and from which the reducing agent stored in the reducing-agent storage tank is jetted into the exhaust gas that passes through the flue, and
a reducing-agent supply pipe (21) that guides the reducing agent stored in the reducing-agent storage tank to the reducing-agent injection nozzle,
and that performs reduction of the nitrogen oxide contained in the exhaust gas exhausted from the marine diesel engine, the reducing-agent supply system for marine SCR comprising:
a reducing-agent-storage-tank chamber (31) that accommodates the reducing-agent storage tank;
a reducing-agent-injection-nozzle chamber (36) that accommodates the proximal end of the reducing-agent injection nozzle; and
a duct (34) that accommodates the reducing-agent supply pipe, **characterized in that** each of the reducing-agent storage tank, the reducing-agent injection nozzle, and the duct are configured as a double structure so that leakage of the reducing agent into the ship interior does not occur.

2. The reducing-agent supply system for marine SCR according to Claim 1, wherein external air taken in from an external-air intake port (40) that opens to the ship exterior is guided to the interior of the double structure so as to be exhausted from an exhaust port (46) that opens to the ship exterior after being utilized for ventilating the interior of the double structure.

3. The reducing-agent supply system for marine SCR according to Claim 1 or 2, wherein gas detectors (51) are individually provided at the top of the interior of the reducing-agent-storage-tank chamber and the top of the interior of the reducing-agent-injection-nozzle chamber.

4. The reducing-agent supply system for marine SCR according to any one of Claims 1 to 3, wherein the reducing-agent storage tank is provided with internal-pressure adjusting means (49) for maintaining the internal pressure thereof within a predetermined range.

5. The reducing-agent supply system for marine SCR according to any one of Claims 1 to 4, wherein first cooling means (62) for cooling the reducing agent existing in the reducing-agent storage tank by cooling the reducing-agent storage tank is provided inside the reducing-agent-storage-tank chamber or in the reducing-agent storage tank.

6. The reducing-agent supply system for marine SCR according to any one of Claims 1 to 5, wherein second cooling means for cooling the reducing agent supplied from the reducing-agent storage tank via the reducing-agent supply pipe is provided in the vicinity of an intake port of a pump that expels pressurized reducing agent into the reducing-agent injection nozzle.

7. A ship-exhaust-gas denitration device equipped with the reducing-agent supply system for marine SCR according to any one of Claims 1 to 6.

8. A ship (1) equipped with the reducing-agent supply system for marine SCR according to any one of Claims 1 to 6 or the ship- exhaust-gas denitration device according to Claim 7.

## Patentansprüche

1. Marines SCR-Reduktionsmittel-Versorgungssystem (10), welches versehen ist, mit
einem Reduktionsmittel-Vorratsbehälter (11), welcher ein Reduktionsmittel lagert,
einem Denitrierungsreaktor (14), welcher mit einem Katalysator versehen ist, der eine Reduktion von Stickoxid durchführt, das in aus einem marinen Dieselmotor (2) ausgeströmtem Abgas enthalten ist,
einer Reduktionsmittel-Einspritzdüse (13), welche in einem Rauchabzug (22) vorgesehen ist, der zwischen dem marinen Dieselmotor und dem Denitrierungsreaktor verbindet, so dass das distale Ende von ihr freiliegt und aus welcher das in dem Reduktionsmittel-Vorratsbehälter gelagerte Reduktionsmittel in das Abgas ausgestoßen wird, das durch den Rauchabzug durchgeht, und
einem Reduktionsmittel-Zuführrohr (21), welches das in dem Reduktionsmittel-Vorratsbehälter gelagerte Reduktionsmittel zu der Reduktionsmittel-Einspritzdüse leitet,
und das eine Reduktion des Stickoxids durchführt, das in aus dem marinen Dieselmotor ausgeströmtem Abgas enthalten ist, wobei das marine SCR-Reduktionsmittel-Versorgungssystem aufweist:
eine Reduktionsmittel-Vorratsbehälter-Kammer (31), welche den Reduktionsmittel-Vorratsbehälter aufnimmt;
eine Reduktionsmittel-Einspritzdüse-Kammer (36), welche das proximale Ende der Reduktionsmittel-Einspritzdüse aufnimmt; und
einen Kanal (34), welcher das Reduktionsmittel-Zuführrohr aufnimmt, **dadurch gekennzeichnet, dass** jeder des Reduktionsmittel-Vorratsbehälters, der Reduktionsmittel-Einspritzdüse und des Kanals als eine Doppelstruktur ausgestaltet sind, so dass eine Leckage des Reduktionsmittels in das Schiffsinnere nicht auftritt.

2. Marines SCR-Reduktionsmittel-Versorgungssystem nach Anspruch 1, wobei Außenluft, die von einer Außenluft-Ansaugöffnung (40) aufgenommen wird, die sich zu dem Schiffsinneren öffnet, zu dem Inneren der Doppelstruktur geleitet wird, um von einer Ausströmöffnung (46) ausgestoßen zu werden, die sich zu dem Schiffsinneren öffnet, nachdem sie zum Belüften des Inneren der Doppelstruktur genutzt wurde.

3. Marines SCR-Reduktionsmittel-Versorgungssystem nach Anspruch 1 oder 2, wobei Gasdetektoren (51) individuell am oberen Ende des Inneren der Reduktionsmittel-Vorratsbehälter-Kammer und am oberen Ende des Inneren der Reduktionsmittel-Einspritzdüse-Kammer vorgesehen sind.

4. Marines SCR-Reduktionsmittel-Versorgungssystem nach einem der Ansprüche 1 bis 3, wobei der Reduktionsmittel-Vorratsbehälter mit einer Innendruck-Einstelleinrichtung (49) zum Beibehalten des Innendrucks von ihm innerhalb eines vorbestimmten Bereichs versehen ist.

5. Marines SCR-Reduktionsmittel-Versorgungssystem nach einem der Ansprüche 1 bis 4, wobei eine erste Kühleinrichtung (62) zum Kühlen des Reduktionsmittels, das in dem Reduktionsmittel-Vorratsbehälter vorhanden ist, durch Kühlen des Reduktionsmittel-Vorratsbehälters, im Inneren der Reduktionsmittel-Vorratsbehälter-Kammer oder in dem Reduktionsmittel-Vorratsbehälter vorgesehen ist.

6. Marines SCR-Reduktionsmittel-Versorgungssystem nach einem der Ansprüche 1 bis 5, wobei eine zweite Kühleinrichtung zum Kühlen des Reduktionsmittels, das von dem Reduktionsmittel-Vorratsbehälter über das Reduktionsmittel-Zuführrohr zugeführt wird, in der Umgebung einer Ansaugöffnung von einer Pumpe vorgesehen ist, die mit Druck beaufschlagtes Reduktionsmittel in die Reduktionsmittel-Einspritzdüse ausstößt.

7. Schiffsabgas-Denitrierungsvorrichtung, die mit dem marinen SCR-Reduktionsmittel-Versorgungssystem nach einem der Ansprüche 1 bis 6 ausgestattet ist.

8. Schiff (1), das mit dem marinen SCR-Reduktionsmittel-Versorgungssystem nach einem der Ansprüche 1 bis 6 oder der Schiffsabgas-Denitrierungsvorrichtung nach Anspruch 7 ausgestattet ist.

## Revendications

1. Système d'alimentation d'agent réducteur pour SCR marine (10) qui est pourvu
d'un réservoir de stockage d'agent réducteur (11) qui stocke un agent réducteur,
d'un réacteur de dénitration (14) qui est pourvu d'un catalyseur qui effectue une réduction d'oxyde d'azote présent dans un gaz d'échappement évacué à partir d'un moteur diesel marin (2),
d'une buse d'injection d'agent réducteur (13) qui est prévue dans un carneau (22) qui communique entre le moteur diesel marin et le réacteur de dénitration de sorte que l'extrémité distale de celui-ci soit exposée et à partir de laquelle l'agent réducteur stocké dans le réservoir de stockage d'agent réducteur est éjecté dans le gaz d'échappement qui passe à travers le carneau, et
d'un tuyau d'alimentation d'agent réducteur (21) qui guide l'agent réducteur stocké dans le réservoir de stockage d'agent réducteur vers la buse d'injection d'agent réducteur,
et qui effectue une réduction de l'oxyde d'azote présent dans le gaz d'échappement évacué à partir du moteur diesel marin, le système d'alimentation d'agent réducteur pour SCR marine comprenant :
une chambre de réservoir de stockage d'agent réducteur (31) qui reçoit le réservoir de stockage d'agent réducteur ;
une chambre de buse d'injection d'agent réducteur (36) qui reçoit l'extrémité proximale de la buse d'injection d'agent réducteur ; et
un conduit (34) qui reçoit le tuyau d'alimentation d'agent réducteur, **caractérisé en ce que** chacun du réservoir de stockage d'agent réducteur, de la buse d'injection d'agent réducteur et du conduit sont configurés sous la forme d'une double structure de sorte que la fuite de l'agent réducteur dans l'intérieur du navire ne se produise pas.

2. Système d'alimentation d'agent réducteur pour SCR marine selon la revendication 1, dans lequel l'air externe aspiré depuis un orifice d'admission d'air externe (40) qui débouche à l'extérieur du navire est guidé vers l'intérieur de la double structure de manière à être évacué à partir d'un orifice d'échappement (46) qui débouche à l'extérieur du navire après avoir été utilisé pour la ventilation de l'intérieur de la double structure.

3. Système d'alimentation d'agent réducteur pour SCR marine selon la revendication 1 ou 2, dans lequel des détecteurs de gaz (51) sont individuellement prévus au niveau de la partie supérieure de l'intérieur de la chambre de réservoir de stockage d'agent réducteur et de la partie supérieure de l'intérieur de la chambre de buse d'injection d'agent réducteur.

4. Système d'alimentation d'agent réducteur pour SCR marine selon l'une quelconque des revendications 1 à 3, dans lequel le réservoir de stockage d'agent réducteur est pourvu d'un moyen de réglage de pression interne (49) destiné à maintenir la pression interne de celui-ci à l'intérieur d'une plage prédéterminée.

5. Système d'alimentation d'agent réducteur pour SCR marine selon l'une quelconque des revendications 1 à 4, dans lequel un premier moyen de refroidissement (62) destiné à refroidir l'agent réducteur présent dans le réservoir de stockage d'agent réducteur par refroidissement du réservoir de stockage d'agent réducteur est prévu à l'intérieur de la chambre de réservoir de stockage d'agent réducteur ou dans le réservoir de stockage d'agent réducteur.

6. Système d'alimentation d'agent réducteur pour SCR marine selon l'une quelconque des revendications 1 à 5, dans lequel un deuxième moyen de refroidissement destiné à refroidir l'agent réducteur alimenté à partir du réservoir de stockage d'agent réducteur par l'intermédiaire du tuyau d'alimentation d'agent réducteur est prévu à proximité d'un orifice d'admission d'une pompe qui expulse l'agent réducteur mis sous pression dans la buse d'injection d'agent réducteur.

7. Dispositif de dénitration de gaz d'échappement de navire équipé du système d'alimentation d'agent réducteur pour SCR marine selon l'une quelconque des revendications 1 à 6.

8. Navire (1) équipé du système d'alimentation d'agent réducteur pour SCR marine selon l'une quelconque des revendications 1 à 6 ou du dispositif de dénitration de gaz d'échappement de navire selon la revendication 7.
